Europäisches Patentamt

European Patent Office

Office européen des brevets

(11) Veröffentlichungsnummer: **0 256 403 B1**

# EUROPÄISCHE PATENTSCHRIFT

(45) Veröffentlichungstag der Patentschrift: 31.07.91

(21) Anmeldenummer: 87111146.4

(22) Anmeldetag: 01.08.87

(51) Int. Cl.⁵: **B65G 61/00**, B67B 5/06, B65G 49/00, B21F 45/04, B65B 5/10

(54) **Verfahren zum automatischen Überführen von Sektflaschendrahtbügeln von einer Bearbeitungsstation zu einer Ablage bzw. von einer Ablage zu einer Weiterbearbeitungsstation sowie Vorrichtung zur Durchführung des Verfahrens.**

(30) Priorität: 08.08.86 DE 3626977
08.10.86 DE 3634223

(43) Veröffentlichungstag der Anmeldung:
24.02.88 Patentblatt 88/08

(45) Bekanntmachung des Hinweises auf die
Patenterteilung:
31.07.91 Patentblatt 91/31

(84) Benannte Vertragsstaaten:
DE ES FR IT

(56) Entgegenhaltungen:
DE-B- 2 615 216

(73) Patentinhaber: Draht- und Metallwarenfabrik
Phillip Schneider GmbH & Co.
Speckerbrücke 2
W-6552 Bad Münster-Ebernburg 1(DE)

(72) Erfinder: Niebling, Heinz, Dipl.-Ing. F.H.
Am Pfalzsprung 10
W-6552 Bad Münster-Ebernburg(DE)

(74) Vertreter: Quermann, Helmut, Dipl.-Ing.
Postfach 6145 Gustav-Freytag-Strasse 25
W-6200 Wiesbaden(DE)

## Beschreibung

Die Erfindung betrifft ein Verfahren zum automatischen Überführen von Sektflaschendrahtbügeln in eine geregelte Anordnung auf eine Ablage, im Anschluß an deren ungeregelte Ausgabe aus einer Bearbeitungsstation sowie ein Verfahren zum automatischen Überführen von in einer geregelten Anordnung auf einer Ablage angeordneten Sektflaschendrahtbügeln, zu einer Weiterbearbeitungsstation, ferner eine Vorrichtung zur Durchführung der Verfahren.

Sektflaschendrahtbügel dienen dem Sichern von in Sektflaschen eingesteckten Sektkorken. Die Sektflaschendrahtbügel werden dabei in einem Automaten aus Drähten oder Blechbändern und Drähten hergestellt. Sie verlassen diese Bearbeitungsstation in ungeregeltem Zustand, d. h. sie werden in einer unterschiedlichen Folge aus der Bearbeitungsstation gegeben und anschließend gesammelt. Bei einem aus der Praxis bekannten Stand der Technik werden die Sektflaschendrahtbügel nach der Ausgabe aus der Bearbeitungsstation auf einer sich unmittelbar an die Bearbeitungsstation anschließenden schwertförmigen Schräge zwangsgeführt und durch einen am unteren Ende des Schwertes angeordneten Anschlag eine Vielzahl von Sektflaschendrahtbügeln geregelt aufgestaut. Das Schwert mit den darauf befindlichen Sektflaschendrahtbügeln wird von Hand entnommen und durch ein anderes ersetzt. Die Bedienungsperson überführt mittels des beigelegten Schwertes die Sektflaschendrahtbügel zu einem Behältnis und legt sie auf dessen Boden ab. Zuletzt wird das Schwert aus der Reihe von Sektflaschendrahtbügeln herausgezogen. Es erfolgen anschließend die geschilderten manuellen Abläufe, bis der Boden des Behältnisses vollständig mit den in parallelen Reihen angeordneten Sektflaschendrahtbügeln gefüllt ist. Sind Reihen von Sektflaschendrahtbügeln übereinander anzuordnen, werden manuell Zwischenlagen zwischen die Reihen gelegt. Umgekehrt wird zur Entnahme der Sektflaschendrahtbügel ein Schwert zwischen die Sektflaschendrahtbügel eingeführt, die Drahtbügel mit dem Schwert einer Eingabe der Weiterbearbeitungsstation zugeführt und das Schwert wiederum aus den Sektflaschendrahtbügeln herausgezogen. Nachteilig ist bei dem geschilderten Verfahren, daß zum einen eine Person voll für das Überführen der Sektflaschendrahtbügel benötigt wird und zum anderen, daß durch das Einführen bzw. Herausziehen des Schwertes verbunden mit der manuellen Tätigkeit in aller Regel ein Verschieben der Sektflaschendrahtbügel erfolgt, was zu einer Störung des verfahrensmäßigen Ablaufes in der Weiterbearbeitungsstation führen kann.

Es ist Aufgabe der Erfindung, ein Verfahren der genannten Art sowie eine Vorrichtung zur Durchführung der Verfahren zu schaffen, wobei gewährleistet sein soll, daß die Sektflaschendrahtbügel während der Überführvorgänge ihre definierte, geregelte Anordnung zueinander beibehalten und manuelle Arbeitsvorgänge entfallen können.

Gelöst wird die Aufgabe bei dem Verfahren zum automatischen Überführen von Sektflaschendrahtbügeln in eine geregelte Anordnung auf eine Ablage, im Anschluß an deren ungeregelte Ausgabe aus einer Bearbeitungsstation dadurch, daß die Sektflaschendrahtbügel längs einer nach unten gerichteten Schräge aus der Bearbeitungsstation ausgegeben, auf der Schräge in eine geregelte Anordnung in Form einer Reihe überführt werden, die Reihe von Sektflaschendrahtbügeln in die Waagerechte überführt wird, eine oberhalb der Reihe verfahrbar angeordnete Greifeinrichtung auf alle in Reihe befindlichen Sektflaschendrahtbügel abgesenkt wird, und die Greifeinrichtung die Sektflaschendrahtbügel anhebt, zur Ablage verfährt, abgesenkt wird und die in Reihe befindlichen Massenartikel auf der Ablage ablegt.

Gelöst wird die Aufgabe bei dem Verfahren zum automatischen Überführen von in einer geregelten Anordnung auf eine Ablage angeordneten Sektflaschendrahtbügeln zu einer Weiterbearbeitungsstation dadurch, daß eine oberhalb der Auflage verfahrbar angeordnete Greifeinrichtung auf alle in einer der Reihen befindlichen Sektflaschendrahtbügel abgesenkt wird, die Greifeinrichtung die Sektflaschendrahtbügel anhebt und die Reihe in eine Position oberhalb einer Waagerechten verfährt, die Greifeinrichtung abgesenkt wird und die in Reihe befindlichen Sektflaschendrahtbügel auf der Waagerechten abgelegt werden, wobei schließlich die Reihe von Sektflaschendrahtbügeln in eine nach unten gerichtete Schräge überführt und in die Weiterbearbeitungsstation übergeben wird.

Die erfindungsgemäßen Verfahren zeichnen sich dadurch aus, daß die Übergabe der Sektflaschendrahtbügel aus der Bearbeitungsstation bzw. die Zufuhr zur Weiterbearbeitungsstation vorzugsweise durch Schwerkraft oder durch eine Fördervorrichtung erfolgt. Letzteres bietet sich insbesondere dann an, wenn solche Niveauunterschiede zwischen der Bearbeitungsstation und der Verpackvorrichtung bzw. der Entpackvorrichtung und der Weiterbearbeitungsstation zu verzeichnen sind, die eine Zuführung der Sektflaschendrahtbügel ausschließlich durch Schwerkraft nicht ermöglichen.

Bei einer Bewegung der Sektflaschendrahtbügel infolge Schwerkraft rutschen diese aus der Bearbeitungsstation auf eine Schräge, die anschließend in eine Waagerechte überführt wird. In der waagerechten Stellung der Sektflaschendrahtbügel werden diese von der Greifeinrichtung ergriffen und zur Ablage verbracht. Umgekehrt erfolgt bei Überführen der Sektflaschendrahtbügel von der Ablage zur Weiterbearbeitungsstation das Ergreifen der auf der Ablage befindlichen Sektflaschendrahtbügel mittels der Greifeinrichtung, die die Sektflaschendrahtbügel zur Waagerechten verfährt und dort absetzt, wobei durch die Überführung der Waagerechten in die Schräge die Sektflaschendrahtbügel infolge Schwerkraft zur Weiterbearbeitungsstation rutschen.

Bei den erfindungsgemäßen Verfahren zum Verpacken der Sektflaschendrahtbügel mittels Schwerkraft erfolgt demnach in einem Zyklus ein Zuführen der Sektflaschendrahtbügel zur Schräge, das Verfahren in die Waagerechte, das anschließende Überführen der Sektflaschendrahtbügel mittels der Greifeinrichtung zur Ablage. Während des Verfahrens der Greifeinrichtung wird die Waagerechte bereits wieder in die Schräge überführt und mit den nachfolgenden, von der Bearbeitungsstation ausgegebenen Sektflaschendrahtbügeln beschickt. Während der Rückfahrbewegung der Greifeinrichtung wird die Schräge wieder in die Waagerechte überführt, so daß die Greifeinrichtung die nächste Reihe von Sektflaschendrahtbügeln übernehmen kann. Beim Zyklus betreffend das Entpakken der Sektflaschendrahtbügel mittels Schwerkraft werden die in einer bestimmten Reihe befindlichen Sektflaschendrahtbügel durch die Greifeinrichtung von der Ablage entnommen und der Waagerechten zugeführt. Während der Rückfahrbewegung der Greifeinrichtung zur Ablage wird die Waagerechte in die Schräge überführt, so daß die Weiterbearbeitungsstation mit dieser Reihe von Sektflaschendrahtbügeln beschickt wird. Es erfolgt anschließend das Ergreifen der nächsten Reihe von Sektflaschendrahtbügeln durch die Greifeinrichtung sowie das Überführen der Schräge in die Waagerechte.

Bei einer Bewegung der Sektflaschendrahtbügel mittels einer Fördervorrichtung, insbesondere einer band- oder kettenartigen Fördervorrichtung tritt ein waagerechter Förderabschnitt an die Stelle der beim Überführen infolge Schwerkraft positionierten Waagerechten. Benachbart zum waagerechten Förderabschnitt ist entsprechend eine Ablage zur Aufnahme der Sektflaschendrahtbügel angeordnet. Ferner ist eine zwischen einer Position oberhalb des waagerechten Förderabschnittes und der Ablage hin- und herverfahrbare sowie absenkbare und anhebbare Greifeinrichtung vorgesehen. Zum Verpacken der Sektflaschendrahtbügel werden diese auf der Fördervorrichtung für beliebig viele weitere waagerechte oder geneigte Förderabschnitte dem der Ablage zugeordneten waagerechten Förderabschnitt zugeführt, dort angehalten und mittels der Greifeinrichtung angehoben. Das Entpacken der Sektflaschendrahtbügel erfolgt im umgekehrten Sinne. Demnach werden die Sektflaschendrahtbügel durch die Greifeinrichtung auf dem waagerechten Förderabschnitt abgelegt und über beliebig viele weitere waagerechte oder geneigt angeordnete Förderabschnitte der Weiterbearbeitungsstation zugeführt. Im Anschluß an die Bearbeitungsstation und vor der Weiterbearbeitungsstation können kombiniert hierzu Schrägen angeordnet sein, über die die Sektflaschendrahtbügel infolge Schwerkraft rutschen.

Sollen mehrere Lagen von Sektflaschendrahtbügeln verpackt werden, beispielsweise um sie zwischenzulagern, ist vorgesehen, die Lagen jeweils durch als Zwischenlagen ausgebildete Ablagen zu trennen. Die Lagen von Sektflaschendrahtbügeln können dabei in Behältnissen, wie Faltschachteln, verpackt oder auf einer Palette gestapelt werden, wobei eine Folie nach Abschluß des Stapelvorganges auf den Stapel geschrumpft wird, um ihm die notwendige Festigkeit und Stabilität zu verleihen. Beim Verpacken der Sektflaschendrahtbügel wird zunächst mit der Greifeinrichtung eine Zwischenlage zur Aufnahme mehrerer Reihen von Sektflaschendrahtbügeln von einem Stapel von Zwischenlagen angehoben, in eine Position oberhalb des Behältnisses oder der Palette verfahren und in dieses bzw. auf diese abgesenkt. Anschließend erfolgt das Beschicken der Zwischenlage mit den Reihen von Sektflaschendrahtbügeln mittels der Greifeinrichtung. Ist die Zwischenlage vollständig beschickt, wird eine nächste Zwischenlage auf die auf der unteren Zwischenlage befindlichen Sektflaschendrahtbügel abgesenkt usw., bis das Behältnis gefüllt ist bzw. die gewünschte Stapelhöhe auf der Palette erreicht ist. Anschließend erfolgt das Schließen des Behältnisses bzw. es wird der Stapel mit der Schrumpffolie umgeben. Das Entpacken der Sektflaschendrahtbügel erfolgt im umgekehrten Sinne.

Um möglichst einfache Bewegungsabläufe zu gewährleisten, sollte die Greifeinrichtung senkrecht und parallel zur Reihe von Sektflaschendrahtbügeln verfahrbar sein. Bestehen die Sektflaschendrahtbügel aus Ferrometallen, kann die Greifeinrichtung so ausgebildet sein, daß die Sektflaschendrahtbügel von ihr elektromagnetisch gehalten werden. Das Manipulieren der Ablage mittels der Greifeinrichtung erfolgt vorteilhaft durch Anlegen eines Unterdruckes zwischen der Ablage und einer Saugeinrichtung der Greifeinrichtung. Durch diese universelle Ausbildung der Greifeinrichtung ist nur ein Verfahrmechanismus erforderlich, um sowohl das Manipulieren der Sektflaschendrahtbügel als auch der Ablage bewerkstelligen zu können.

Gelöst wird die vorgenannte Aufgabe schließlich mittels einer Vorrichtung zur Durchführung der dargestellten Verfahren, die gekennzeichnet ist durch eine Führungsbahn, die durch Kraftmittel um ein Gelenk zwischen einer Waagerechten und einer vom Gelenk schräg nach unten gerichteten Stellung verschwenkbar ist, eine benachbart zur Führungsbahn angeordnete Ablage zur Aufnahme der Sektflaschendrahtbügel sowie eine zwischen einer Position oberhalb der Führungsbahn der Ablage hin- und herfahrbare sowie absenk- und anhebbare Greifeinrichtung. Die Aufgabe wird ferner durch eine Vorrichtung gelöst, die gekennzeichnet ist durch eine band-oder kettenartige Fördervorrichtung mit mindestens einem waagerechten sowie geneigt angeordneten Förderabschnitten, einer benachbarte zum waagerechten Förderabschnitt angeordneten Ablage zur Aufnahme der Sektflaschendrahtbügel sowie eine zwischen einer Position oberhalb des waagerechten Förderabschnittes um die Ablage hin- und herverfahren, sowie absenk- und anhebbaren Greifeinrichtung. Zweckmäßig ist die Greifeinrichtung als gerade Schiene ausgebildet, deren Länge der Innenlänge der Ablage entspricht und deren Unterseite der Kontur der oberen Bereiche der Sektflaschendrahtbügel angepaßt ist, mit im Bereich der Unterseite der Schiene über deren Länge angeordneten Elektromagneten sowie mehreren aus der Schiene ausfahrbaren Saugeinrichtungen.

Um die Sektflaschendrahtbügel bei einer Bewegung mittels Schwerkraft definiert führen zu können, ist gemäß einer besonderen Ausführungsform der Erfindung vorgesehen, daß die Führungsbahnen im oberen Bereich, d. h. in dem Bereich, der mit den Sektflaschendrahtbügeln in Anlage gelangt, U-förmig profiliert ausgebildet ist. Ferner ist vorgesehen, daß in der Verlängerung der maximal geneigten Führungsbahn an einem Ende der Führungsbahn eine entsprechend geneigt und entsprechend ausgebildete, unmittelbar an die Führungsbahn angrenzende weitere Zuführ- bzw. Abführbahn angeordnet ist. Die im Bereich des oberen Endes der Führungsbahn angeordnete Zuführbahn weist an ihrem unteren Ende eine in den Ausgabeweg der Sektflaschendrahtbügel verfahrbare Rückhaltevorrichtung auf. Es ist hierdurch möglich, während des Verfahrens der Führungsbahn aus der Bearbeitungsmaschine ausgegebene Sektflaschendrahtbügel anzustauen, bis die Führungsbahn erneut in ihrer bezüglich der Zuführbahn ausgerichtete schräge Position überführt ist. Entsprechendes gilt für die Führungsbahn als solche. Sie solte im Bereich ihres unteren Endes eine in den Ausgabeweg der Sektflaschendrahtbügel verfahrbare Rückhaltevorrichtung aufweisen. Diese Rückhaltevorrichtung dient einerseits dem Zweck, die Sektflaschendrahtbügel auf der Führungsbahn vor der Entnahme durch die Greifeinrichtung definiert zu positionieren, andererseits der geregelten Ausgabe von der Führungsbahn zur Weiterverarbeitungsstation. In gleichem Sinne sollte bei einer Bewegung der Sektflaschendrahtbügel durch eine Fördervorrichtung diese mit entsprechenden Rückhaltevorrichtungen ausgestattet sein und gegebenenfalls mit Zuführ- bzw. Abführbahnen zusammenwirken.

Parallel zur Führungsbahn bzw dem waagerechten Förderabschnitt sollte ein Förderband angeordnet sein zur Aufnahme und zum Verfahren der die Sektflaschendrahtbügel aufnehmenden Behälter bzw. der auf den Stapeln befindlichen Sektflaschendrahtbügel. Das Förderband kann auch tiefer angeordnet sein und an einem Hubsystem enden, auf das der Behälter bzw. die Paletten gleiten. Mittels dieses zweckmäßig motorisch angetriebenen Hubsystems wird die jeweilige Zwischenlage der Behälter nach dessen Öffnen bzw. der Stapel nach dem Entfernen der Schrumpffolie auf Entpakkungsebene verbracht, bleibt dort bis zur Entleerung und wird auf gleiche Weise zwecks Ausschub wieder auf Förderbandebene abgesenkt. Eine solche Anordnung ist dann angezeigt, wenn die Entpackungsebene bedingt durch die Weiterbearbeitungsstation sehr hoch liegt. Senkrecht zur Führungsbahn bzw. dem waagerechten Förderabschnitt ist zweckmäßig eine waagerechte Linear-Antriebseinheit mit einer auf deren Schlitten montierten vertikalen Linear-Antriebseinheit zur Aufnahme der parallel zur Führungsbahn bzw. zum waagerechten Förderabschnitt zwischen dieser und dem Behälter bzw. der Palette verfahrbaren, anheb- und absenkbaren Greifeinrichtung angeordnet. Die horizontale Linear-Antriebseinheit sollte sich beidseits der Führungsbahn bzw. dem waagerechten Förderabschnitt oberhalb des auf einer Seite befindlichen Behältnisses bzw. der Palette und oberhalb des auf der anderen Seite befindlichen Stapels von Zwischenlagen erstrecken. Hierdurch wird der Bauraum für die erfindungsgemäße Vorrichtung wesentlich reduziert, abgesehen von den kurzen Verfahrwegen der Greifeinrichtung zwischen der Führungsbahn bzw. dem waagerechten Förderabschnitt und dem Behältnis bzw. der Palette sowie dem Stapel von Zwischenlagen und dem Behältnis bzw. der Palette. Um zu verhindern, daß auf eine Palette verbrachte, gestapelte Sektflaschendrahtbügel beim Verfahren aus dem Beladebereich verrutschen, sollte unmittelbar nach Abschluß des Beladens noch im Beladebereich die Palette und die darauf gestapelten Sektflaschendrahtbügel mit der Schrumpffolie versehen werden.

Die Erfindung ist nachfolgend anhand von Ausführungsbeispielen in den Zeichnungen schematisch dargestellt und näher erläutert. Es zeigen

Fig. 1 eine Ansicht einer erfindungsgemäßen Vorrichtung zum Entpacken von Sektflaschendrahtbügeln, senkrecht zur Frontfläche der Vorrichtung gesehen,

Fig. 2 eine Detailansicht der Vorrichtung schräg zur Frontfläche gesehen beim Anheben einer Zwischenlage durch die Greifeinrichtung,

Fig. 3    eine Detailansicht gemäß Fig. 2 beim Anheben einer ersten Reihe geordneter Sektflaschendrahtbügel,

Fig. 4    eine Detailansicht gemäß den Fig. 2 und 3 mit abgelegter erster Reihe,

Fig. 5    eine Detailansicht der als Verpakkungsvorrichtung ausgebildeten Vorrichtung schräg zur Rückfläche gesehen beim Beschicken der Vorrichtung mit Sektflaschendrahtbügeln,

Fig. 6    eine Vorrichtung zum Entpacken und Verpacken von Sektflaschendrahtbügeln mit einer Fördervorrichtung für die Sektflachendrahtbügel in einer Darstellung entsprechend der Fig. 1 und

Fig. 7    eine Detaildarstellung der Kette der in Fig. 6 gezeigten Fördervorrichtung.

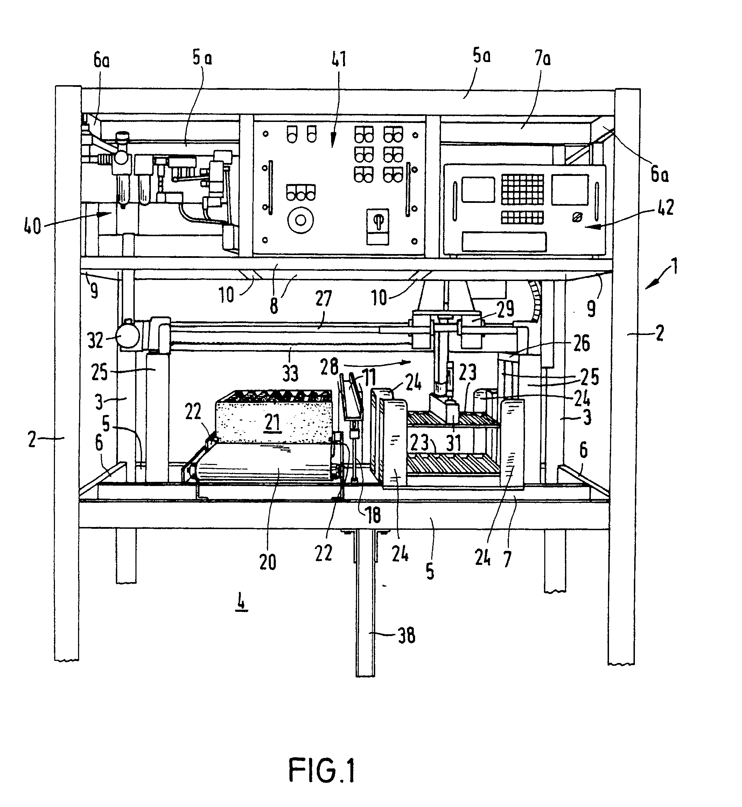

Fig. 1 zeigt einen äußeren Rahmen 1 zur Aufnahme der noch näher zu beschreibenden Vorrichtung zum Verpacken der Sektflaschendrahtbügel. Der Rahmen 1 besitzt zwei senkrecht verlaufende vordere Stützen 2 sowie zwei gleichfalls senkrecht verlaufende hintere Stützen 3, die jeweils mit ihren unteren Enden auf dem Boden 4 aufstehen. In einem Abstand vom Boden 4, der etwa einem Drittel der Höhe der Stützen 2 bis 3 entspricht, verlaufen zwischen den beiden vorderen Stützen 2 und den beiden hinteren Stützen 3 waagerechte Streben 5. In gleicher Höhe wie diese Streben 5 befinden sich jeweils zwischen einer vorderen Stütze 2 und der benachbarten hinteren Stütze 3 waagerechte Streben 6. Parallel zu den waagerechten Streben 5 ist eine weitere waagerechte Strebe 7 angeordnet, die in der Mitte der waagerechten Streben 6 angreift. Entsprechend der Anordnung der Streben 5, 6 und 7 im unteren Bereich des Rahmens 1 befinden sich am oberen Ende der Stützen 2 und 3 waagerechte Streben 5a, 6a und 7a. In einem Abstand von den Streben 5a, 6a und 7a, der wiederum etwa einem Drittel der Höhe der Stützen 2 und 3 entspricht, ist in dem Rahmen 1 eine weitere Ebene angeordnet, die aus die vorderen Stützen 2 sowie die hinteren Stützen 3 verbindenden waagerechten Streben 8, jeweils einer vordere Strebe 2 mit der hinteren Strebe 3 verbindenden waagerechten Streben 9 sowie zwischen den waagerechten Streben 8 parallel zu den Streben 9 verlaufenden waagerechten Streben 10 besteht. Der Abstand jeder Strebe 10 von der ihr benachbarten Strebe 9 entspricht etwa einem Drittel der Länge der Strebe 8.

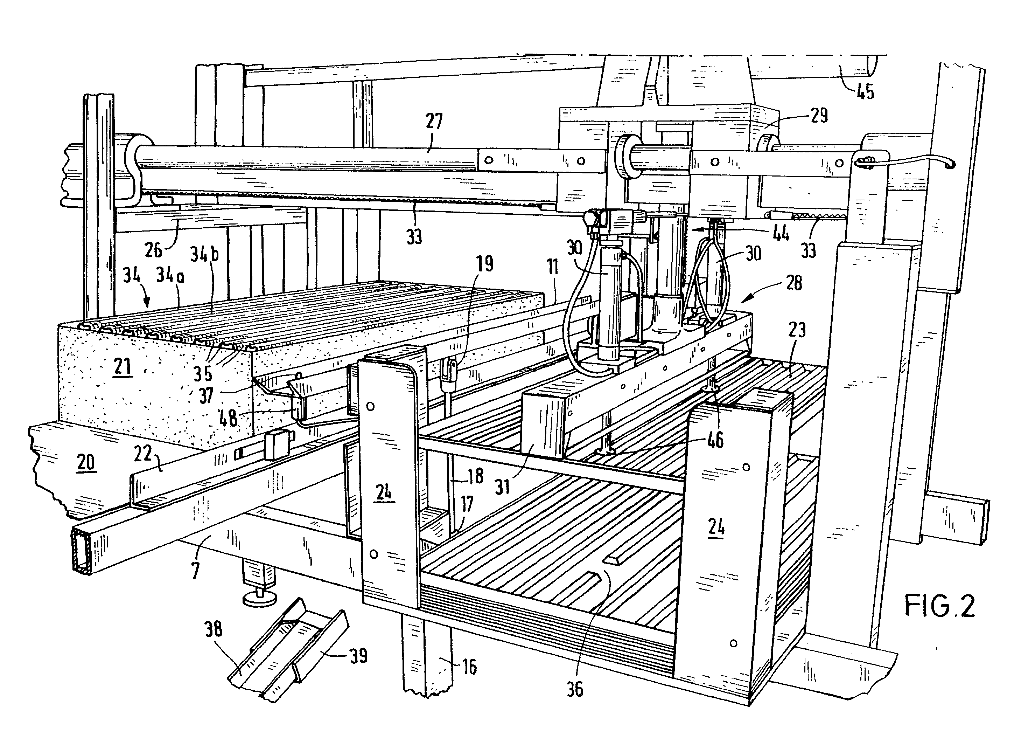

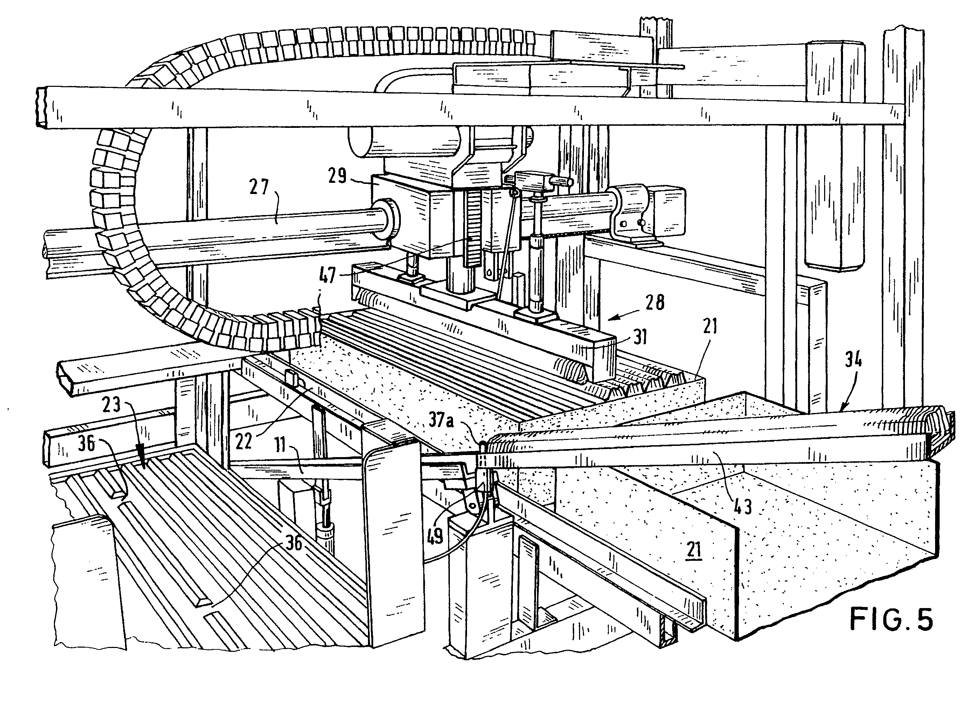

Wie insbesondere der Darstellung der Fig. 2 zu entnehmen ist, verläuft parallel zu den Streben 6 etwa in der zwischen den Streben 6 gebildeten Symmetrielinie eine nach oben offene, U-förmig profilierte Führungsbahn 11, die im Bereich ihres hinteren Endes 12 ein an ihrer Unterseite befestigtes Lagerelement 13 aufweist. Im Bereich der Mitte der Strebe 5 ist ein nach oben gerichtetes Stützelement 14 angeordnet, dessen oberes freies Ende über einen Flansch 15 das Lagerelement 13 der Führungsbahn 11 schwenkbar aufnimmt. Die eigentliche Schwenkverbindung zwischen den Teilen 13 und 15 ist nicht näher dargestellt. In der Mitte der Strebe 7 ist an dieser ein Stützelement 16 befestigt, das seinerseits auf der dem Stützelement 14 zugewandten Seite einen nur teilweise sichtbaren Pneumatikzylinder 17 aufnimmt, dessen Kolbenstange 18 nach oben ausfahrbar ist. Die Kolbenstange 18 greift mit ihrem freien Ende schwenkbar an einem unterhalb der Führungsbahn 11 angeordneten Lagerelement 19 an. Das Lagerelement 19 befindet sich dabei in einem solchen Abstand vom Lagerelement 13, der etwa der Hälfte der Längserstreckung der Führungsbahn 11 entspricht. Mittels des Pneumatikzylinders 17 läßt sich durch Einfahren bzw. Ausfahren der Kolbenstange 18 die Führungsbahn 11 von der in den Fig. 1 bis 4 dargestellen waagerechten Position in die in Fig. 5 dargestellte schräge Position und umgekehrt verfahren.

Im auf die Darstellung der Fig. 1 bezogenen linken Bereich des Rahmens 1 befindet sich ein Transportband 20 für die zu füllenden bzw. zu entleerenden Behältnisse. In der Darstellung der Fig. 1 bis 4 ist ein solches gefülltes Behältnis 21 gezeigt. Die Darstellung der Fig. 5 verdeutlicht die Anordnung eines gefüllten Behältnisses 21 sowie eines nachfolgenden leeren Behältnisses 21. Die seitliche Führung der Behältnisse 21 auf dem Transportband 20 erfolgt über beidseitig des Transportbandes 20 angeordnete Bleche 22. Das Transportband 20 ist jeweils auf den Streben 5 gelagert. Das Niveau des oberen Bandbereiches des Transportbandes 2 ist so gewählt, daß die Oberkante des auf dem Transportband 20 angeordneten Behältnisses 21 sich in etwa auf gleichem Niveau befindet wie die Oberkante der waagerecht ausgerichteten Führungsbahn 11.

In dem auf die Darstellung der Fig. 1 bezogenen rechten Bereich des Rahmens 1 befindet sich seine Anordnung zum Stapeln von zwischen die Lagen von Sektflaschendrahtbügeln einzubringenden Zwischenlagen 23. Jeweils auf der Strebe 7 und der hinteren Strebe 5 sind zwei nach oben gerichtete Eckstützen 24 angeordnet, die als Begrenzungskontur für die zwischen ihnen angesammelten Zwischenlagen 23 dienen. Behältnis 21, Führungsbahn 11 und Zwischenlagen 23 sind so zueinander ausgerichtet, daß deren Längsseiten parallel zueinander verlaufen. Die Oberkanten der Eckstützen 24 befinden sich auf gleichem Niveau wie die Oberkante der waagerecht ausgerichteten Führungsbahn 11. Im Bereich jeder der Streben 6 sind mit der Strebe 7 un der hinteren Strebe 5 nach oben gerichtete Stützelemente 25 verbunden, deren oberen Querträger 26 tragen. Die beiden Querträger 26 tragen senkrecht zur Führungsbahn 11 die beiden Endlager der horizontalen Linear-Antriebseinheit 27. Auf dem horizontal verfahrbaren Schlitten 29 dieser Linear-Antriebseinheit 27 ist die vertikale Linear-Antriebseinheit 44 für den Vertikalhub der Greifeinrichtung 28 montiert. Die Greifeinrichtung 28 besteht aus einer geraden Schiene 31, die am unteren freien Ende der vertikalen Linear-Antriebseinheit 44 angeordnet ist. Die Länge der geraden Schiene 31 entspricht der Innenlänge des Behälters 21. Beidseits des Schlittens 29 sind auf der geraden Schiene 31 Pneumatikzylinder 30 montiert, deren hohle Kolbenstangen vertikal durch die gerade Schiene 31 führen und an deren unteren freien Enden sich Vakuum-Saugnäpfe 46 zum Handhaben der Zwischenlagen 23 befinden. Die Kolbenstangen mit den Saugnäpfen stehen in oberer Endlage hinter der Unterkante der geraden Schiene 31 zurück und werden nur zur Handhabung der Zwischenlage 23 nach unten ausgefahren. Die Bewegung der Schiene 31 erfolgt immer in der Horizontalen oder Vertikalen. Die Verfahrbarkeit der Greifeinrichtung 28 und damit der Schiene 31 wird mittels zweier elektrischer Schrittmotore 32 und 45 bewesrkstelligt. Der Schrittmotor 32 ist am linken Endlager der horizontalen Lineareinheit 27, der Schrittmotor 45 mittig an die vertikale Linear-Antriebseinheit 44 angeflanscht. Die Kraftübertragung bei der Linear-Antriebseinheit 27 erfolgt über Ritzel/Zahnriemen 33, die Kraftübertragung bei der Linear-Antriebseinheit 44 über Ritzel/Zahnstange 47.

Nachfolgend soll anhand der Figuren 1 bis 4 das Verfahren zum Entpacken der in einer geregelten Anordnung in Form von mehreren Reihen 34 a, 34 b usw. angeordneten Sektflaschendrahtbügel 35 zum Zuführen zu einer nicht näher dargestellten Weiterbearbeitungsstation erläutert werden.

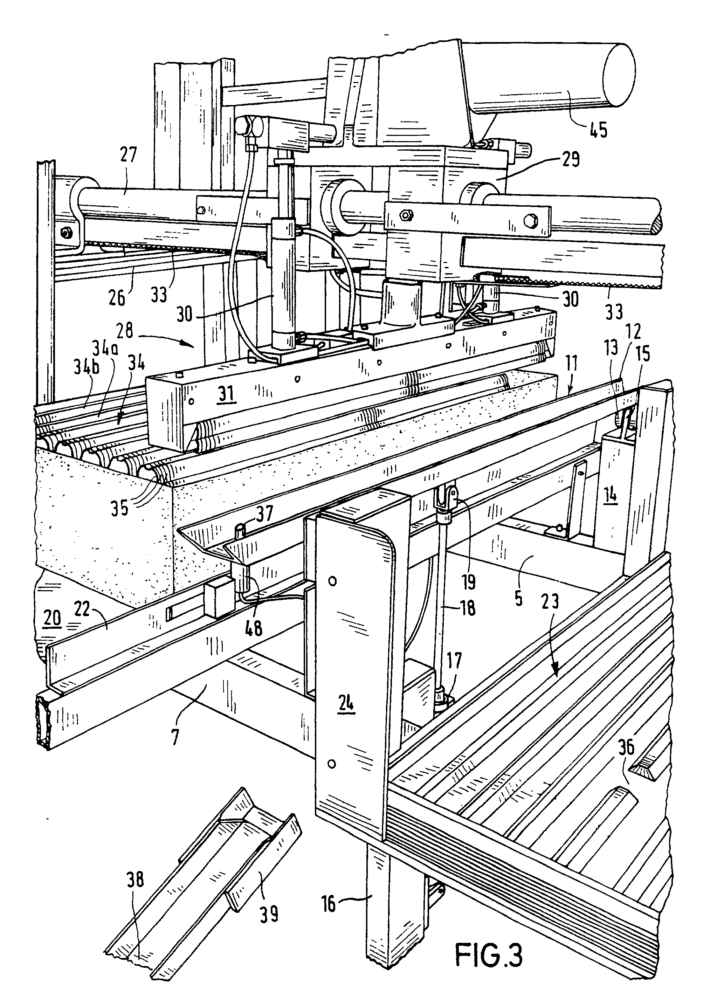

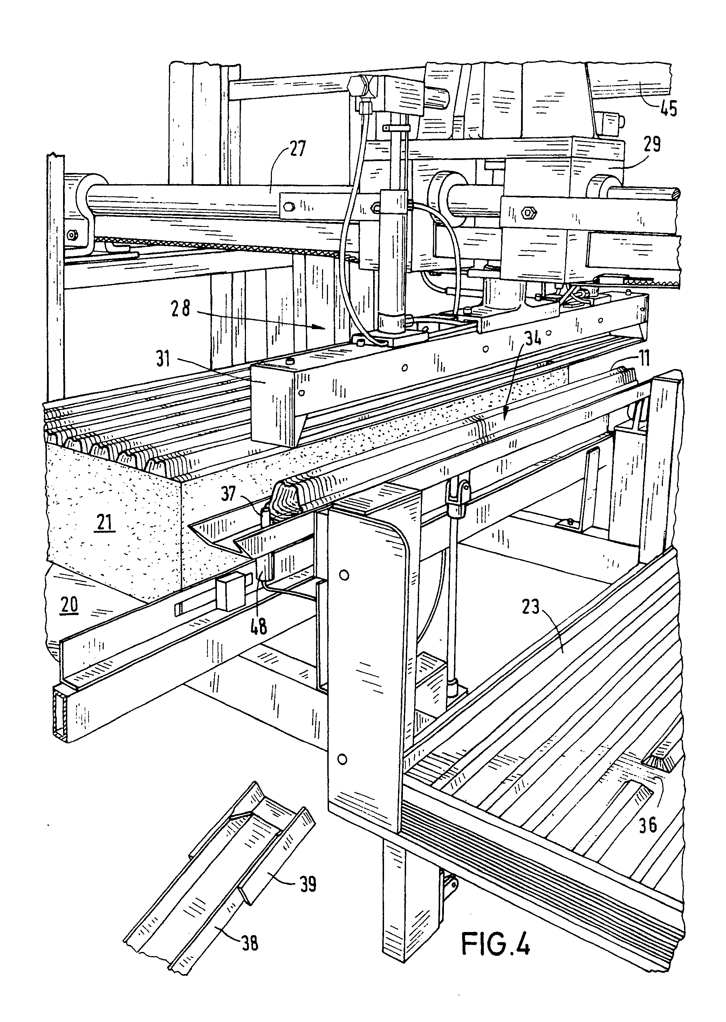

Es wird zunächst das betreffende Behältnis 21, beispielsweise eine Faltschachtel mit den in Reihen 34 a, 34 b angeordneten Sektflaschendrahtbügeln 35 auf dem Transportband 20 so weit vorgeschoben, bis sich das Behältnis 21 auf Höhe der Führungsbahn 11 befindet. Im Behältnis 14 sind mehrere Lagen von Sektflaschendrahtbügeln 35 übereinander angeordnet, die jeweils durch Zwischenlagen 23 voneinander getrennt sind. Hat das Behältnis 21 die zuvor geschilderte Position erreicht, so wird mittels des elektrischen Schrittmotors 32 der Schlitten 29 von einer Position oberhalb der Führungsbahn 11 in eine solche verfahren, daß die Schiene 31 mit der Mittellängsachse des Behältnisses 21 fluchtet. Geht man davon aus, daß auf der obersten Lage von Sektflaschendrahtbügeln 25 sich eine Zwischenlage 23 befindet, so erfolgt anschliessend das synchrone Absenken der Schiene 31 mittels des elektrischen Schrittmotors 45 bis kurz oberhalb der Zwischenlage 23. An der Unterseite der Schiene 31 sind Vakuum-Saugnäpfe 46 angeordnet, die über Pneumatikzylinder 30 auf gesonderte ebene Flächen 36 der Zwischenlage 23 abgesenkt werden und infolge des angelegten Unterdruckes die Zwischenlage 23 ergreifen. Durch synchrone Beaufschlagung der Pneumatikzylinder 30 wird die Zwischenlage 23 von der darunter befindlichen Lage Sektflaschendrahtbügel abgehoben, mittels des Schrittmotors 45 weiter angehoben, durch erneutes Betätigen des elektrischen Schrittmotores 32 in eine Position oberhalb der vier Eckstützen 24 verfahren und anschließend mittels der Pneumatikzylinder 30 in den Raum zwischen den Eckstützen 24 abgesenkt. Diese Position ist in der Darstellung der Figuren 1 und 2 gezeigt. Bei Erreichen dieser Stellung wird der Unterdruck in den Saugnäpfen aufgehoben, so daß die durch die Eckstützen 24 geführte Zwischenlage 23 auf die darunter befindlichen Zwischenlagen 23 fällt. Anschließend werden mittels der Pneumatikzylinder 30 die Saugnäpfe 46 wieder eingefahren. Es erfolgt anschließend in der geschilderten Art und Weise das Anheben der Schiene 31, sowie das Verfahren der Schiene 31 in eine Position oberhalb der ersten im Behältnis 21 angeordneten Reihe 34 von Sektflaschendrahtbügeln 25. Es wird dann die Schiene 31 so weit abgesenkt, bis deren Unterseite in Anlage mit der genannten Reihe sich befindet. Die Unterseite der Schiene 31 ist der Kontur der oberen Bereiche der Sektflaschendrahtbügel 35 angepaßt, im Bereich der Unterseite der Schiene 31 sind nicht näher dargestellte Elektromagnetstäbe angeordnet. Es werden die Elektromagnetstäbe aktiviert, so daß die Reihe von Sektflaschendrahtbügel 35 an der Unterseite der Schiene 31 haftet. Die Schiene 31 wird anschließend angehoben und in eine Position oberhalb der waagerecht angeordneten, U-förmig profilierten Führungsbahn 11 verfahren. Diese Position ist in Figur 3 dargestellt. Anschließend erfolgt das Absenken der Schiene 31 bis zum Aufliegen der Sektflaschendrahtbügel 35 auf der Führungsbahn 11, infolge der U-förmigen Profilierung der Führungsbahn 11 ist eine seitliche Führung der einzelnen Sektflaschendrahtbügel 35 durch die Schenkel der Führungsbahn 11 gewährleistet. Nach dem Unterbrechen der Stromzufuhr zu den Elektromagnetstäben erfolgt eine Trennung der Schiene 31 von den Sektflaschendrahtbügeln 35, die Schiene 31 wird in die in Figur 4 dargestellte Position angehoben, anschließend zur zweiten Reihe von Sektflaschendrahtbügeln 35 verfahren. Von dort beginnt bezüglich des Bewegungsablaufes der Greifeinrichtung 28 der beschriebene Zyklus.

Wie der Darstellung der Figuren 2 bis 4 zu entnehmen ist, weist das vordere, abschwenkbare Ende der Führungsbahn 11 eine nur schematisch angedeutete, in den Ausgabeweg der Sektflaschendrahtbügel verfahrbare Rückhaltevorrichtung 37 auf. Diese ist als an der Unterseite der Führungsbahn 11 befestigten Pneumatikbauteil 48 ausgeführt, dessen als Rückhaltevorrichtung 37 dienender Ausrückstift jeweils in den Weg der Reihe von Sektflaschendrahtbügeln 35 ausfahrbar ist. In ausgefahrenem Zustand der Rückhaltevorrichtung 37 ist damit gewährleistet, daß trotz Neigung der Führungsbahn 11 die Reihe von Sektflaschendrahtbügeln 35 nicht auf der Führungsbahn 11 hinunter rutschen kann.

Der Darstellung der Figur 1 bis 4 ist zu entnehmen, daß unterhalb der vorderen Strebe 5 parallel zu den Streben 6, jedoch geneigt zu diesen eine Abführbahn 38 angeordnet ist. Die Neigung der Abführbahn 38 ist dabei so gewählt, daß die Führungsbahn 11 in ihrer nach unten geschwenkten Position eine Gerade mit dieser Abführbahn 38 bildet. Während nun die Greifeinrichtung 28 aus der in Figur 4 dargestellten Position zur zweiten Reihe von Sektflaschendrahtbügeln 35 fährt, um diese zu ergreifen, wird die Führungsbahn 11 mittels des Pneumatikzylinders 17 nach unten geschwenkt, so daß die einander zugewandten Enden im Bereich der das freie Ende der Abführbahn 38 umgebenden Manschetten 39 aneinander grenzen. Es wird dann der Ausrückstift 37 eingefahren, so daß die erste Reihe von Sektflaschendrahtbügeln 35 von der Führungsbahn 11 auf die Abführbahn 38 rutscht und von dort in die Weiterbearbeitungsstation. Unmittelbar nachdem die Sektflaschendrahtbügel 35 die Führungsbahn 11 verlassen haben, wird der Ausrückstift 37 erneut ausgefahren und die Führungsbahn 11 wieder in die Waagerechte Stellung verschwenkt. Der Neigungswinkel der Bahnen 11 und 38 bezüglich der Waagerechten ist dabei so zu wählen, daß ein stetiges Rutschen der Sektflaschendrahtbügel 35 auf den Bahnen 11 und 38 gewährleistet ist.

Nach dem Entleeren der in den Figuren 1 bis 4 gezeigten Reihen 34 von Sektflaschendrahtbügeln 35 wird die unter diesen Reihen befindliche Zwischenlage im aufgezeigten Sinne entfernt und anschließend die weiteren Reihen von Sektflaschendrahtbügeln aus dem Behältnis 21 entnommen, bis es schließlich vollständig entleert ist. Es folgt dann das Ausfahren des entleerten Behältnisses 21 aus dem Entladebereich und das Einfahren eines gefüllten neuen Behältnisses 21 in den Entladebereich.

Im oberen Bereich des Rahmens 1 sind Aggregate zum Steuern der Vorrichtung angedeutet. Links ist die Einrichtung 40 zum Steuern der pneumatisch wirkenden Teile angedeutet, in der Mitte befindet sich eine elektrische Anpaßsteuerung 41 zur Stromversorgung und zur manuellen Ansteuerung einzelner Bewegungen. Rechts ist eine Positionier- und Ablaufsteuerung 42 angedeutet, in der alle Bewegungsabläufe zu einem Programm zusammengefaßt und gespeichert sind. Die Schrittmotore und alle automatischen Bewegungsabläufe werden ausnahmslos von hier gesteuert.

Die Figur 5 verdeutlicht den geringfügig abgewandelten Aufbau der Vorrichtung zur Durchführung des Verfahrens zum Verpacken der Sektflaschendrahtbügel 35 in der geregelten Anordnung in den Behältnissen 21 im Anschluß an ihre ungeregelte Ausgabe aus einer nicht näher dargestellten Bearbeitungsstation. Die in Figur 5 dargestellte Vorrichtung unterscheidet sich von der in den Figuren 1 bis 4 dargestellten Vorrichtung durch das Fehlen der Abführbahn 38, statt dessen weist die Vorrichtung gemäß Figur 5 eine gemäß der Abführbahn 38 geneigte Zuführbahn 43 auf. Das untere Ende der Zuführbahn 43 grenzt unmittelbar an das obere Ende der Führungsbahn 11 an, der Figur ist zu entnehmen, daß in der nach unten geschwenkten Stellung der Führungsbahn 11 die Zuführbahn 43 und die Führungsbahn 11 eine Gerade bilden. Die Zuführbahn 43 ist dann an ihrem unteren Ende entsprechend dem unteren Ende der Führungsbahn 11 ausgebildet, d.h. sie weist gleichfalls eine Rückhaltevorrichtung 37 a mit Pneumatikbauteil 49 auf. Zum Beschicken der Behältnisse 21 wird ein erstes Behältnis 21 mittels des Transportbandes 20 in den mit dem Entladebereich nach der Variante gemäß den Figuren 1 bis 4 übereinstimmenden Beladebereich gefahren und bei Erreichen dieser Position das Transportband angehalten. Von der Bearbeitungsstation werden die Sektflaschendrahtbügel 35 einzeln auf die Zuführbahn 43 ausgegeben und infolge der Rückhaltevorrichtung 37 a angestaut bis zur Bildung einer Reihe 34 von Sektflaschendrahtbügeln 35. Nach dem Einfahren des Ausrückstiftes der Rückhaltevorrichtung 37 a rutschen die Sektflaschendrahtbügel 35 von der Zuführbahn 43 auf die geneigte Führungsbahn 11, bis der vorerste Sektflaschendrahtbügel 35 gegen den am unteren Ende der Führungsbahn 11 angeordneten, ausgefahrenen Ausrückstift 37 stößt und die Sektflaschendrahtbügel 35 damit auf der Führungsbahn 11 gehalten werden. Nachdem der letzte Sektflaschendrahtbügel 35 die zuführbahn 43 verlassen hat, wird der Ausrückstift 37 a erneut ausgefahren, so daß die folgenden aus der Bearbeitungsstation ausgegebenen Sektflaschendrahtbügel 35 wieder angestaut werden. Währenddessen erfolgt das Verschwenken der Führungsbahn 11 in die waagerechte Stellung, das Abnehmen der geordneten Reihe 34 von Sektflaschendrahtbügeln 35 von der Führungsbahn 11 mittels der Greifeinrichtung 28 mit anschließendem Ablegen auf der Zwischenlage 23. Nach dem weiteren Absenken der Führungsbahn 11 kann dann ein erneuter Beladezyklus vonstatten gehen, gegebenenfalls mit dem Einbringen einer Zwischenlage 23 auf die Reihen 34 von Sektflaschendrahtbügeln 35 bei vollständig beladener, darunter befindlicher Zwischenlage 23. Nach dem vollständigen Füllen des Behältnisses 21 wird dieses aus dem Beladebereich verfahren und durch ein leeres Behältnis 21 ersetzt.

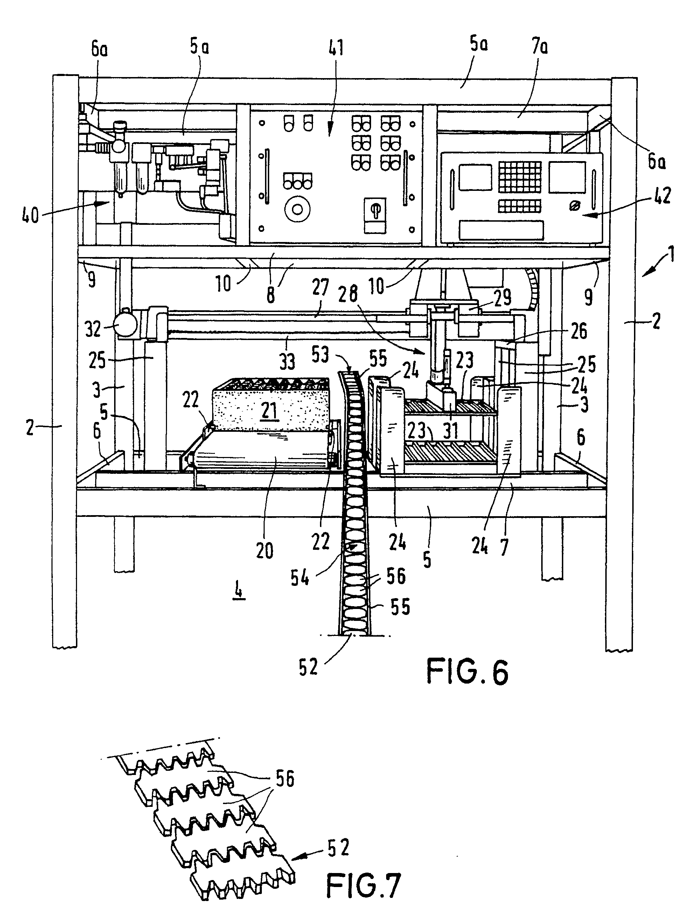

Fig. 6 zeigt eine gegenüber den vorbeschriebenen Vorrichtungen geringfügig abgewandelte Vorrichtung zum Ver- und Entpacken von Sektflaschendrahtbügeln. Mit den beschriebenen Ausführungen übereinstimmende Teile sind in der Figur mit gleichen Bezugsziffern bezeichnet. Bei der in Fig. 6 gezeigten Vorrichtung ist statt der verschwenkbaren Führungsbahn 11 und der Abführbahn 38 bzw. der Zuführbahn 43 eine in einem U-förmigen Querschnitt aufweisenden Führungsprofil 55 geführte Kettenfördervorrichtung 52 vorgesehen. Die Kettenfördervorrichtung 52 besitzt einen waagerechten Förderabschnitt 53, dessen Länge und Position der in die waagerechten und verschwenkten Führungsbahn 11 der anderen Ausführungsformen entspricht. An den waagerechten Förderabschnitt 53 schließt sich gemäß der Darstellung in Fig. 6 ein nach unten geneigter Förderabschnitt 54 an. Je nach den örtlichen Verhältnissen zwischen der Vorrichtung zum Verpacken oder Entpacken und der Bearbeitungsstation bzw. der Weiterbearbeitungsstation kann sich an den waagerechten Förderabschnitt 53 ein nach oben geneigter Förderabschnitt oder auch ein gleichfalls waagerechter Förderabschnitt anschließen. Entscheidend ist ausschließlich, daß der unterhalb der Greifeinrichtung 28 angeordnete Bereich der Kettenfördervorrichtung 52 waagerecht angeordnet ist, um zum waagerechten Förderabschnitt 53 die Sektflaschendrahtbügel entnehmen zu können und sie zum Verpacken oder zum Entpacken dort abzulegen. Das Überführen der Sektflaschendratbügel von der Bearbeitungsstation zum waagerechten Förderabschnitt 53 oder von diesem Abschnitt zur Weiterbearbeitungsstation kann aufgrund der Gestaltung der in der Fig. 7 im Detail dargestellten Kettenglieder 56 auch entlang Kurven erfolgen. Zum Überführen der Sektflaschendrahtbügel von der Bearbeitungsstation auf die Kettenfördervorrichtung 52 bzw. von der Kettenfördervorrichtung in die Weiterbearbeitungsstation kann der Kettenfördervorrichtung 52 eine Zuführbahn 43 bzw. eine Abführbahn 38 vor- bzw. nachgeordnet sein. Auf der schrägen Zuführbahn 53 werden die aus der Bearbeitungsstation ausgebenen Sektflaschendrahtbügel in die geregelte Anordnung in Form der Reihe überführt, indem sie gegen einen bewegbaren Anschlag rutschen. Von dort gelangen die Sektflaschendrahtbügel auf die Kettenfördervorrichtung 52, die die Sektflaschendrahtbügel spätestens im Bereich der Greifeinrichtung in die Waagerechte überführt, um von dort verpackt zu werden. Nach dem Entpacken und Auflegen der Sektflaschendrahtbügel auf die Kettenfördervorrichtung werden diese kurz vor der Weiterbearbeitungsstation der Abführbahn 38 zugeführt, von der aus die Sektflaschendrahtbügel dann in die Weiterbearbeitungsstation rutschen.

Während des Transportes auf der Kettenfördervorrichtung 52 werden die Sektflaschendrahtbügel seitlich durch die Schenkel des U-förmigen Führungsprofils 55 geführt. In den Weg der Kettenfördervorrichtung 52 können gegebenenfalls bewegbare Anschläge ragen, um den Transport der Sektflaschendrahtbügel bei laufender Kettenvorrichtung zu stoppen. Die Kettenglieder selbst sind, wie in Fig. 7 dargestellt ist, kammartig ausgebildet und bestehen aus Kunststoff. Der Reibungswert zwischen den Kunststoffkettengliedern und den Metallsektflaschendrahtbügeln ermöglicht ein schlupffreies Bewegen der Sektflaschendrahtbügel in einem weiten Neigungsbereich der Kettenfördervorrichtung. Gegebenenfalls können die einzelnen Kettenglieder zusätzliche, nicht näher dargestellte Mitnehmer aufweisen.

**Patentansprüche**

1. Verfahren zum automatischen Überführen von Sektflaschendrahtbügeln in eine geregelte Anordnung auf eine Ablage im Anschluß an deren ungeregelte Ausgabe aus einer Bearbeitungsstation, **gekennzeichnet durch** folgende Merkmale:

a) Die Sektflaschendrahtbügel werden längs einer nach unten gerichteten Schräge aus der Bearbeitungsstation ausgegeben.

b) Die Sektflaschendrahtbügel werden auf der Schräge in eine geregelte Anordnung in Form einer Reihe überführt.

c) Die Reihe von Sektflaschendrahtbügeln wird in die Waagerechte überführt.

d) Eine oberhalb der Reihe verfahrbar angeordnete Greifeinrichtung wird auf alle in Reihe befindlichen Sektflaschendrahtbügel abgesenkt.

e) Die Greifeinrichtung hebt die Sektflaschendrahtbügel an, verfährt sie zur Ablage, wird abgesenkt und legt die in Reihe befindlichen Sektflaschendrahtbügel auf der Ablage ab.

2. Verfahren nach Anspruch 1, **dadurch gekennzeichnet,** daß mit der Greifeinrichtung eine Zwischenlage von einem Stapel von Zwischenlagen angehoben, in eine Position oberhalb eines Behältnisses oder einer Palette verfahren und in dieses bzw. auf dieses abgesenkt wird, sowie anschließend das Beschicken der Zwischenlage mit Reihen von Sektflaschendrahtbügeln mittels der Greifeinrichtung erfolgt.

3. Verfahren zum automatischen Überführen von in einer geregelten Anordnung auf einer Ablage angeordneten Sektflaschendrahtbügeln zu einer Weiterbearbeitungsstation, **gekennzeichnet durch** folgende Merkmale:

a) Eine oberhalb der Ablage verfahrbar angeordnete Greifeinrichtung wird auf alle in einer der Reihen befindlichen Sektflaschendrahtbügel abgesenkt.

b) Die Greifeinrichtung hebt die Sektflaschendrahtbügel an und verfährt die Reihe in eine Position oberhalb einer Waagerechten.

c) Die Greifeinrichtung wird abgesenkt und legt die in Reihe befindlichen Sektflaschendrahtbügel auf der Waagerechten ab.

d) Die Reihe von Sektflaschendrahtbügeln wird in eine nach unten gerichtete Schräge überführt und in die Weiterbearbeitungsstation übergeben.

4. Verfahren nach Anspruch 3, **dadurch gekennzeichnet,** daß mit der Greifeinrichtung alle auf einer Zwischenlage in einem Behältnis oder auf einer Palette befindlichen Reihen von Sektflaschendrahtbügeln entpackt werden, anschließend die Greifeinrichtung in eine Position oberhalb des Behälters bzw. der Palette verfahren und auf die Zwischenlage abgesenkt wird, diese anhebt, zu einem Stapel von Zwischenlagen verfährt und auf diesen absenkt.

5. Verfahren nach einem der Ansprüche 1 bis 4, **dadurch gekennzeichnet,** daß die Greifeinrichtung senkrecht und parallel zur Reihe von Sektflaschendrahtbügeln verfahrbar ist.

6. Verfahren nach einem der Ansprüche 1 bis 5, **dadurch gekennzeichnet,** daß die Sektflaschendrahtbügel von der Greifeinrichtung elektromagnetisch gehalten werden.

7. Verfahren nach einem der Ansprüche 2 oder 4 bis 6, **dadurch gekennzeichnet,** daß die Zwischenlage von der Greifeinrichtung durch Anlegen eines Unterdruckes zwischen der Zwischenlage und einer Saugeinrichtung der Greifeinrichtung gehalten wird.

8. Verfahren nach einem der Ansprüche 1, 2 oder 5 bis 7, **dadurch gekennzeichnet,** daß nach dem Beladen der Palette mit den Sektflaschendrahtbügeln der aus Palette, Zwischenlagen und den Sektflaschendrahtbügeln gebildete Stapel mit einer Schrumpffolie umgeben bzw. zum Entladen des Stapels die Schrumpffolie entfernt wird.

9. Vorrichtung zur Durchführung der Verfahren nach einem der Ansprüche 1 bis 8, **gekennzeichnet durch** eine Führungsbahn (11), die durch Kraftmittel (17) um ein Gelenk (13, 15) zwischen einer Waagerechten und einer vom Gelenk (13, 15) schräg nach unten gerichteten Stellung verschwenkbar ist, eine benachbart zur Führungsbahn (11) angeordnete Ablage (23) zur Aufnahme der Sektflaschendrahtbügel (35) sowie eine zwischen einer Position oberhalb der Führungsbahn (11) und der Ablage (23) hin-und herverfahrbare, sowie absenk- und abhebbare Greifeinrichtung (28).

10. Vorrichtung nach Anspruch 9, **dadurch gekennzeichnet,** daß die Führungsbahn (11) im oberen Bereich U-förmig profiliert ausgebildet ist.

11. Vorrichtung nach einem der Ansprüche 9 oder 10, **dadurch gekennzeichnet,** daß in der Verlängerung der maximal geneigten Führungsbahn (11) an einem Ende der Führungsbahn (11) eine entsprechend geneigte und entsprechend ausgebildete, unmittelbar an die Führungsbahn (11) angrenzende weitere Zuführ- (43) bzw. Abführbahn (38) angeordnet ist.

12. Vorrichtung nach Anspruch 11, **dadurch gekennzeichnet,** daß die Führungsbahn (11) im Bereich ihres unteren Endes eine in den Ausgabeweg der Sektflaschendrahtbügel (35) verfahrbare Rückhaltevorrichtung (37) aufweist.

13. Vorrichtung nach Anspruch 11 oder 12, **dadurch gekennzeichnet,** daß die im Bereich des oberen Endes der Führungsbahn (11) angeordnete Zuführbahn (43) an ihrem unteren Ende eine in den Ausgabeweg der Sektflaschendrahtbügel (35) verfahrbare Rückhaltevorrichtung (37a) aufweist.

14. Vorrichtung zur Durchführung der Verfahren nach einem der Ansprüche 1 bis 8, **gekennzeichnet durch** eine band-oder kettenartige Fördervorrichtung (52) mit mindestens einem waagerecht (53) sowie einem geneigt (54) angeordneten Förderabschnitt, einer benachbart zum waagerechten Förderabschnitt (53) angeordneten Ablage (23) zur Aufnahme der Sektflaschendrahtbügel (35) sowie einer zwischen einer Position oberhalb des waagerechten Förderabschnittes (53) und der Ablage (23) hin- und herverfahrbaren, sowie absenk- und anhebbaren Greifeinrichtung (28).

15. Vorrichtung nach einem der Ansprüche 9 bis 14, **dadurch gekennzeichnet,** daß die Greifeinrichtung (28) als gerade Schiene (31) ausgebildet ist, deren Länge der Innenlänge der Ablage (23) entspricht und deren Unterseite der Kontur der oberen Bereiche der Sektflaschendrahtbügel (35) angepaßt ist, mit im Bereich der Unterseite der Schiene (31) über deren Länge angeordneten Elektromagneten sowie mehreren aus der Schiene (31) ausfahrbaren Saugeinrichtungen (46).

16. Vorrichtung nach einem der Ansprüche 9 bis 15, **dadurch gekennzeichnet,** daß parallel zur Führungsbahn (11) bzw. zum waagerechten Förderabschnitt (53) ein Transportband (20) zur Aufnahme und zum Verfahren der die Sektflaschendrahtbügel (35) aufnehmenden Behältnis (21) bzw. Paletten vorgesehen ist.

17. Vorrichtung nach Anspruch 16, **dadurch gekennzeichnet,** daß das Transportband (20) in einer niedrigeren Ebene als die Verpackungsebene angeordnet ist und die Ablagen (23) bzw. Zwischenlagen (23) der auf ihm transportierten Behältnisse (21) bzw. Paletten mittels eines motorisch angetriebenen Hubsystems auf Entpackungsebene verbracht werden.

18. Vorrichtung nach einem der Ansprüche 9 bis 17, **dadurch gekennzeichnet,** daß sich über der Führungsbahn (11) bzw. dem waagerechten Förderabschnitt (53) und rechtwinklig zu diesen eine Linear-Antriebseinheit (27) befindet, auf deren horizontal verfahrbarem Schlitten (29) eine vertikale Linear-Antriebseinheit (44) montiert ist, an deren unterem freien Ende die Greifeinrichtung (28) angeordnet ist, die zwischen dem Behältnis (21) bzw. der Palette und einem Stapel von Zwischenlagen (23) horizontal und vertikal verfahren werden kann.

19. Vorrichtung nach Anspruch 18, **dadurch gekennzeichnet,** daß die horizontal angeordnete Linear-Antriebseinheit (27) sich beidseits der Führungsbahn (11) bzw. des waagerechten Förderabschnittes (53) oberhalb des auf einer Seite der Führungsbahn (11) bzw. des Förderabschnittes (53) befindlichen Behältnisses (21) bzw. Paletten und oberhalb des auf der anderen Seite befindlichen Stapels von Zwischenlagen (23) erstreckt.

**Claims**

1. Method for the automatic transfer of wire brackets for bottles of sparkling wine into an orderly arrangement onto a rack subsequent to their disorderly discharge from a processing station, characterised by the following features:

    a) The wire brackets for bottles of sparkling wine are discharged from the processing station along a downwardly sloping surface.

    b) The wire brackets for bottles of sparkling wine are transferred on the sloping surface into an orderly arrangement in the form of a row.

    c) The row of wire brackets for bottles of sparkling wine is transferred to the horizontal plane.

    d) A gripper device arranged displaceably above the row is lowered onto all the wire brackets for bottles of sparkling wine disposed in a row.

    e) The gripper device lifts the wire brackets for bottles of sparkling wine up, moves them to the rack, is lowered and places the wire brackets for bottles of sparkling wine disposed in a row on the rack.

2. Method according to Claim 1, characterised in that an intermediate rack is lifted up by the gripper device from a stack of intermediate racks, is moved into a position above a receptacle or a pallet and is lowered into said receptacle or onto said pallet, and subsequently the loading of the intermediate rack with rows of wire brackets for bottles of sparkling wine is effected by means of the gripper device.

3. Method for the automatic transfer of wire brackets for bottles of sparkling wine, which are arranged in an orderly arrangement on a rack, to a further processing station, characterised by the following features:

    a) A gripper device, arranged displaceably above the rack, is lowered onto all the wire brackets for bottles of sparkling wine disposed in one of the rows.

    b) The gripper device lifts up the wire brackets for bottles of sparkling wine and moves the row into a position above a horizontal plane.

    c) The gripper device is lowered and places the wire brackets for bottles of sparkling wine disposed in a row on the horizontal plane.

    d) The row of wire brackets for bottles of sparkling wine is transferred to a downwardly sloping surface and passed into the further processing station.

4. Method according to Claim 3, characterised in that all the rows of wire brackets for bottles of sparkling wine, which are disposed on an intermediate rack in a receptacle or on a pallet, are released by the gripper device, subsequently the gripper device is moved into a position above the receptacle or the pallet and is lowered onto the intermediate rack, lifts the latter up, moves it to a stack of intermediate racks and lowers it onto said stack.

5. Method according to one of Claims 1 to 4, characterised in that the gripper device is displaceable perpendicular and parallel to the row of wire brackets for bottles of sparkling wine.

6. Method according to one of Claims 1 to 5, characterised in that the wire brackets for bottles of sparkling wine are held electromagnetically by the gripper device.

7. Method according to one of Claims 2 or 4 to 6, characterised in that the intermediate rack is held by the gripper device by a negative pressure being applied between the intermediate rack and a suction device of the gripper device.

8. Method according to one of Claims 1, 2 or 5 to 7, characterised in that, after the pallet has been loaded with the wire brackets for bottles of sparkling wine, the stack, formed by the pallet, intermediate racks and the wire brackets for bottles of sparkling wine, is surrounded by a shrink film and, for unloading the stack, the shrink film is removed.

9. Apparatus for carrying out the method according to one of Claims 1 to 8, characterised by a guide path (11), which can be swivelled by power means (17) about a joint (13, 15) between a horizontal plane and a position sloping downwards from the joint (13, 15), a rack (23) arranged adjacent to the guide path (11) for receiving the wire brackets for bottles of sparkling wine (35), and a gripper device (28) which is displaceable back and forth between a position above the guide path (11) and the rack (23) and can be lowered and lifted.

10. Apparatus according to Claim 9, characterised in that the guide path (11) is of a U-shaped profile construction in the upper region.

11. Apparatus according to one of Claims 9 or 10, characterised in that, at one end of the guide path (11), a correspondingly inclined and correspondingly constructed further feed path (43) or discharge path (38) is arranged, directly adjoining the guide path (11) in the extension of the maximum inclination of the guide path (11).

12. Apparatus according to Claim 11, characterised in that the guide path (11) has in the region of its lower end a retaining apparatus (37) which can be moved into the discharge path of the wire brackets for bottles of sparkling wine (35).

13. Apparatus according to Claim 11 or 12, characterised in that the feed path (43), arranged in the region of the upper end of the guide path (11), has at its lower end a retaining apparatus (37a) which can be moved into the discharge path of the wire brackets for bottles of sparkling wine (35).

14. Apparatus for carrying out the method according to one of Claims 1 to 8, characterised by a belt- or chain-type conveying apparatus (52) having at least one conveying section in horizontal (53) arrangement and one conveying section in inclined (54) arrangement, a rack (23) arranged adjacent to the horizontal conveying section (53) for receiving the wire brackets for bottles of sparkling wine (35) and a gripper device (28) which is displaceable back and forth between a position above the horizontal conveying section (53) and the rack (23) and can be lowered and lifted.

15. Apparatus according to one of Claims 9 to 14, characterised in that the gripper device (28) is constructed as a straight rail (31), the length of which corresponds to the inside length of the rack (23), and the underside of which is matched to the contour of the upper regions of the wire brackets for bottles of sparkling wine (35), having electromagnets arranged in the region of the underside of the rail (31) over its length and a plurality of suction devices (46) which can be driven out from the rail (31).

16. Apparatus according to one of Claims 9 to 15, characterised in that a transport belt (20) is provided parallel to the guide path (11) or to the horizontal conveying section (53) for receiving and for displacing the receptacle (21) or pallets receiving the wire brackets for bottles of sparkling wine (35).

17. Apparatus according to Claim 16, characterised in that the transport belt (20) is arranged in a lower plane than the packaging plane and the racks (23) or intermediate racks (23) of the receptacles (21) or pallets transported on said transport belt are moved to the release level by means of a motor-driven lifting system.

18. Apparatus according to one of Claims 9 to 17, characterised in that there is above the guide path (11) or the horizontal conveying section (53) and at right angles to the latter a linear drive unit (27), on the horizontally displaceable slide (29) of which a vertical linear drive unit (44) is mounted, on the lower free end of which the gripper device (28) is arranged which can be displaced horizontally and vertically between the receptacle (21) or the pallet and a stack of intermediate racks (23).

19. Device according to Claim 18, characterised in that the horizontally arranged linear drive unit (27) extends on both sides of the guide path (11) or the horizontal conveying section (53) above the receptacle (21) or pallets disposed on one side of the guide path (11) or the conveying section (53) and above the stack of intermediate racks (23) disposed on the other side.

**Revendications**

1. Procédé de transfert automatique de muselets de bouteilles à champagne, en fil métallique, selon un agencement réglé sur un support en liaison avec leur émission non ordonnée par un poste de travail, procédé caractérisé par les caractéristiques suivantes :

   a) on émet les muselets le long d'un plan incliné dirigé vers le bas à partir du poste de travail,

   b) on transfère les muselets sur le plan incliné suivant une disposition ordonnée sous la forme d'une rangée,

   c) on transfère la rangée de muselets en position horizontale,

   d) on abaisse sur tous les muselets d'une rangée, un dispositif de préhension monté mobile au-dessus de la rangée,

   e) le dispositif de préhension soulève les muselets, les transporte vers un support, s'abaisse et dispose les muselets de la rangée sur le support.

2. Procédé selon la revendication 1, caractérisé en ce qu'on soulève avec le dispositif de préhension, une couche intermédiaire d'une pile de couches intermédiaires, on transfère cette couche intermédiaire dans une position au-dessus d'un conteneur d'une palette et on la descend dans ce conteneur ou sur cette palette, puis on garnit la couche intermédiaire de rangées de muselets à l'aide du dispositif de préhension.

3. Procédé de transfert automatique de muselets placés sur un support suivant une disposition ordonnée, pour les fournir à un poste de travail aval, procédé caractérisé en ce que :

   a) on abaisse sur tous les muselets d'une rangée, un dispositif de préhension mobile au-dessus du support,

   b) on soulève par le dispositif de préhension, les muselets et on conduit la rangée dans une position au-dessus d'une horizontale,

   c) on abaisse le dispositif de préhension et on place les muselets de la rangée sur l'horizontale,

   d) on transfère la rangée de muselets sur une surface inclinée dirigée vers le bas, et on fait passer les muselets dans un poste de travail aval.

4. Procédé selon la revendication 3, caractérisé en ce qu' on déballage avec le dispositif de préhension, toutes les rangées de muselets se trouvant sur une couche intermédiaire dans un conteneur ou sur une palette, puis on déplace le dispositif de préhension dans une position au-dessus du conteneur ou de la palette et on l'abaisse sur la couche intermédiaire, on soulève celle-ci et on le déplace vers une pile de couches intermédiaires et on le descend sur cette pile.

5. Procédé selon l'une quelconque des revendications 1 à 4, caractérisé en ce qu'on déplace le dispositif de préhension verticalement, et parallèlement à la rangée de muselets.

6. Procédé selon l'une des revendications 1 à 5, caractérisé en ce qu'on maintient de manière électromagnétique les muselets par le dispositif de préhension.

7. Procédé selon l'une des revendications 2 ou 4 à 6, caractérisé en ce qu'on maintient la couche intermédiaire par le dispositif de préhension en créant une dépression entre la couche intermédiaire et un dispositif à ventouses du dispositif de préhension.

8. Procédé selon l'une des revendications 1, 2 ou 5 à 7, caractérisé en ce qu'après le chargement de la palette avec les muselets, on entoure la pile formée sur la palette et comprenant les couches intermédiaires et les muselets, avec une feuille rétractable ou on enlève cette feuille pour le déchargement de la pile.

9. Dispositif pour la mise en oeuvre du procédé selon l'une des revendications 1 à 8, caractérisé par un chemin de guidage (11) qui peut basculer sous l'action de moyens (17) exerçant une force, autour d'une articulation (13, 15), entre une position horizontale et une position inclinée vers le bas à partir de l'articulation (13, 15), un support (23) au voisinage du chemin de guidage (11) pour recevoir des muselets (35) ainsi qu'un dispositif de préhension mobile alternatif et susceptible de descendre et de monter entre une position au-dessus du chemin de guidage (11) et du support (23).

10. Dispositif selon la revendication 9, caractérisé en ce que le chemin de guidage (11) est un profilé en forme de U dans sa zone supérieure.

11. Dispositif selon l'une des revendications 9 ou 10, caractérisé en ce que dans le prolongement du chemin de guidage (11), à l'une de ses extrémités, on a un autre chemin d'alimentation (43) ou d'évacuation (38) de forme correspondante, directement adjacent au chemin de guidage (11).

12. Dispositif selon la revendication 11, caractérisé en ce que le chemin de guidage (11) comporte au niveau de son extrémité inférieure, un dispositif de retenue (37) susceptible de venir dans le chemin d'émission des muselets (35).

13. Dispositif selon l'une des revendications 11 ou 12, caractérisé en ce que le chemin d'alimentation (43) prévu dans la zone de l'extrémité supérieure du chemin de guidage (11) comporte à son extrémité inférieure, un dispositif de retenue (37a) susceptible de venir dans le chemin de distribution des étriers (35).

14. Dispositif pour la mise en oeuvre du procédé selon l'une des revendications 1 à 8, caractérisé par un dispositif de transfert (52) à bande ou à chaîne avec au moins un segment horizontal (53) et au moins un segment incliné (54), un support (23) prévu au voisinage du segment de transfert (53) horizontal pour recevoir les muselets (35) ainsi qu'un dispositif de préhension (28) mobile en va-et-vient et en montée et descente entre une position au-dessus du segment horizontal (53) du dispositif de transfert et le support (23) et aussi susceptible de descendre et de monter.

15. Dispositif selon l'une des revendications 9 à 14, caractérisé en ce que le dispositif de préhension (28) est en forme de rail rectiligne (31) dont la longueur correspond à la longueur intérieure du support (23) et dont la face inférieure est adapté au contour de la zone supérieure des muselets (35), avec des électro-aimants prévus sur sa longueur dans la zone de la face inférieure du rail (31) et plusieurs dispositifs d'aspiration (ventouses) (46) susceptibles de venir en saillie par rapport au rail (31).

16. Dispositif selon l'une des revendications 9 à 15, caractérisé en ce qu'en parallèle au chemin de guidage (11) ou au segment de transfert horizontal (53), il est prévu une bande de transport (20) pour recevoir et déplacer les conteneurs ou palettes (21) recevant les muselets (35).

17. Dispositif selon la revendication 16, caractérisé en ce que la bande de transport (20) est prévue dans un plan situé en-dessous du plan d'emballage et le support (23) ou couches intermédiaires (23) pour les conteneurs (21) ou les palettes sont transportés par un système de levage entraîné par moteur pour venir dans le plan de déballage.

18. Dispositif selon l'une des revendications 9 à 17, caractérisé en ce qu'au-dessus du chemin de guidage (11) ou du segment horizontal (53) du moyen de transfert et perpendiculaire à celuici, se trouve une unité d'entraînement (27), linéaire dont le chariot (29) mobile horizontalement porte une unité d'entraînement linéaire (44), verticale dont l'extrémité inférieure libre est munie du dispositif de préhension (28), et qui peut se déplacer entre le conteneur (21) et la palette ou une pile de couches intermédiaires (23), suivant un mouvement horizontal et vertical.

19. Dispositif selon la revendication 18, caractérisé en ce que l'unité d'entraînement linéaire (27) montée horizontalement est prévue de part et d'autre du chemin de guidage (11) ou du segment horizontal (53) du chemin de transfert au-dessus d'un conteneur (21) ou palette se trouvant d'un côté du chemin de guidage (11) ou du segment (53) du chemin de transfert et au-dessus de la pile de couches intermédiaires (23) se trouvant de l'autre côté.

FIG.1

FIG.2

EP 0 256 403 B1

FIG.3

FIG.4

FIG.5

FIG.6

FIG.7